# EUROPEAN PATENT APPLICATION

(11) **EP 4 309 553 A1**
(43) Date of publication of application: **24.01.2024**
(21) Application number: 22186129.7
(22) Date of filing: 20.07.2022
(51) Int. Cl.: A47J 47/16

(54) **ACCESSORY FOR TILTING A CONTAINER FOR PREPARING FOOD**

(71) Applicant: BSH Hausgeräte GmbH, 81739 München (DE)
(72) Inventor: Stankov, Dejan, 1000 Ljubljana (SI); Rudez, Darko, 3230 Sentjur, Slowenien (SI); Berzelak, Matej, 3334 Luce (SI); Krüger, Tobias, 80639 Munich (DE); Ackermann, Felix, 80802 Munich (DE)

(57) **Abstract**

Disclosed is an accessory 100 for tilting a container 200 for preparing food. The accessory 100 comprises a base component 10 and a swivel component 20. The swivel component 20 is pivotable relative to the base component 10 and configured to take the container 200 in a first pivot position, and to support and tilt the container when being pivoted, about a pivot angle α, to a second pivot position.

Further disclosed is an assembly 1000 comprising such accessory 100 and a container 200 compatible to the accessory, i.e., a container the swivel component 20 of the accessory is suited to take, support and tilt. Moreover, a kitchen appliance is disclosed which comprises a container 200, a base station and said accessory 100 configured to take, support and tilt the container 200.

## Description

The present invention concerns an accessory for tilting a container intended for preparing food therein. The invention further pertains to an assembly comprising such accessory and a compatible container for preparing food. Moreover, the invention concerns a kitchen appliance comprising a base station, a container and an accessory for tilting the container.

When food is prepared, respective ingredients are typically treated, such as chopped, mixed, whipped, kneaded and/or cooked in a container. After the respective procedure, the content of the container is poured and/or scrapped out of the container, either for serving or for further processing.

It is an object of the present invention to improve convenience of the process of preparing food.

The object is achieved with an accessory according to claim 1, with an assembly according to claim 11, and with a kitchen appliance according to claim 12. Advantageous embodiments are disclosed in the dependent claims, the description and the figures.

An accessory according to the present invention serves for tilting a container which is designated for preparing food therein. The accessory comprises a base component and a swivel component, which is pivotable from a first pivot position relative to the base component to a second pivot position relative to the base component and retour. In the first pivot position, the swivel component is adapted to take the container, preferably due to a geometry of the swivel component as detailed below. When the swivel component with the such taken container then is pivoted (by a user) to the second pivot position, it supports and tilts the container.

A respective content of the container can therefore be easily poured out of the container, wherein the user does not have to simpultaneously lift the possibly heavy container, but can use at least one hand for other purposes such as scraping out the container or holding a receptacle receiving the content. In particular, the accessory thus facilitates an easy emptying of the container.

Preferably, the swivel component is configured to take the container in an orientation of the container which is designated for preparing food in the container, in particular, with a filling opening of the container directed upwards and/or a bottom of the container being the container's undermost portion; therein, the bottom is preferably oriented horizontally.

In particular, the base component and the swivel component are preferably connected to each other by a hinge. Advantageously, the hinge may allow for separating the swivel component from the base component, e.g., by a form fit connection (such as by at least one protrusion of one of the swivel component engaging in a slot formed by the base component and/or vice versa). In particular, the swivel component may preferably be adapted to be disassembled from the base component.

According to advantageous embodiments, the pivot angle (from the first to the second pivot position) is at least 60°, at least 85°, at least 90° or at least 120°. Thereby, the container can be particularly well emptied when the swivel component supporting it has been pivoted to the second pivot position.

The swivel component of the accessory may advantageously form a reception recess configured to receive at least a portion of the container. Accordingly, the swivel component may engage with the container, whereby the container may be particularly safely supported by the swivel component when being tilted. In particular, such recess may at least partially be shaped as a groove, and/or said portion of the container may be a section of a rim the container may comprise at its bottom. In particular, the reception recess may advantageously be interrupted (thus separated in two portions) by a projection the swivel component may form. Such projection may be configured to engage with a clearance possibly formed in the rim of the container. Thereby, a rotation of the container relative to the swivel component can be prevented.

The swivel component may be configured to take and support the container at a wall of the container and/or at a handle thereof.

Additionally or alternatively, the swivel component may preferably be configured to reach, in the first pivot position and in an orientation of the base component designated for utilisation of the accessory, under a bottom of the container when taking it in the first pivot position. Thereby, the accessory can support and tilt the container in a particularly safe manner.

According to advantageous embodiments, the swivel component comprises at least one anti-slide element configured to stabilise the container supported by the swivel component during pivoting from the first to the second pivot position, and in the second pivot position. Such anti-slide element may comprise an elastic material such as an elastomer, in particular silicone, the container may come to rest on. Thereby, the container can be inhibited to escape from the swivel component during the pivoting and in the second pivot position. The at least one anti-slide element may preferably comprise at least one thickening; with such thickening, the anti-slide element may preferably engage with a depression formed in the container. This may provide for an an advantageous self-locking of the container supported by the swivel component.

The base component of the accessory may preferably comprise at least one anti-glide element configured to stabilise the accessory on a worktop (counter). Such anti-glide element may advantageously be at least partially made of an elastic material such as an elastomer, in particular silicone.

Preferably, the accessory comprises a stopper element configured to delimit a pivoting of the swivel component relative to the base component from the first to the second pivot position. In particular, such stopper element may define the second pivot position. Thereby, an overtilting of the container may automatically be inhibited without the user having to pay attention to it.

According to advantageous embodiments, the swivel component is configured to automatically reach the first pivot position due to gravity when the base component is in an orientation designated for use and the swivel component is devoid of a container. Thereby, the accessory is ready for use when just being free.

Additionally or alternatively, the accessory may preferably be configured to retain the swivel component with and/or without the container in the second pivot position once it has been pivoted into the second position. Accordingly, a user may scrape out the container using one hand only, without having to care for the container not tilting back. Such embodiment thus may support disabled users and/or allow a user to simultaneously use his second hand for other activity, such as holding a receptacle receiving the food being poured out, distributing the food on a backing tray, or further treating the food, just to mention some examples. The retaining may appear due to gravity, and/or the accessory may comprise a retainer mechanism for retaining the swivel component (possibly along with the container) in the second pivot position.

For instance, as such retainer mechanism, the accessory may comprise an adjustable bar configured to be moved, by a the user, into a locking position in which it may block a pivoting of the swivel component relative to the base component.

Additionally or alternatively, the retainer mechanism may comprise a snap mechanism. Such snap mechanism may be configured to lock the swivel relative to the base component automatically when the swivel component is pivoted in the second pivot position relative to the base component.

For instance, the base component may comprise an elastic snap, and the swivel component may form a groove, wherein the elastic snap is configured to (automatically) latch in the groove when the swivel component is in the second pivot position. Additionally or alternatively, the swivel component may comprise an elastic snap, and the base component may form a groove, the elastic snap configured to (automatically) latch in the groove when the swivel component is in the second pivot position.

The snap mechanism may preferably be releasable by a user applying a force exceeding a holding force of the snap meachanism. Additionally or alternatively, the accessory may comprise a release mechanism such as a moveable lever or key adapted to release the snap mechanism (e.g., in respective embodiments, by relieving the elastic snap from the groove) when being manipulated by a user.

An assembly according to the present invention comprises an accessory according to an embodiment of the present invention, and a container adapted to be taken, supported and tilted by the swivel component of the accessory.

The container may form part of a kitchen appliance, in particular, of a multi-purpose kitchen appliance. It may be configured to engage with the swivel component. For instance, the container may have a bottom comprising a rim outwardly protruding from a ground of the container. Such rim may be configured to be inserted, with a section thereof, into a reception recess the swivel component of the accessory may form, as mentioned above. In particular, a clearance may be formed in the rim, and the reception recess may be interrupted by a projection configured to engage with said clearance, thereby preventing a rotation of the container relative to the swivel component.

A kitchen appliance according to the present invention comprises a container and a base station, the base station defining a designated position for the container and configured to drive a treatment of food contained in the container, such as chopping, mixing, whipping, kneading and/or cooking/ heating the food. In particular, the base station may preferably comprise an electric motor. The kitchen appliance according to the present invention further comprises an accessory according to an embodiment of the present invention, which is compatible with the container, i.e., suited to take, support and tilt the container with its swivel component.

According to advantageous embodiments, the container and the base station of the kitchen appliance form part of a multi-purpose kitchen appliance.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and are not defined again for each figure.

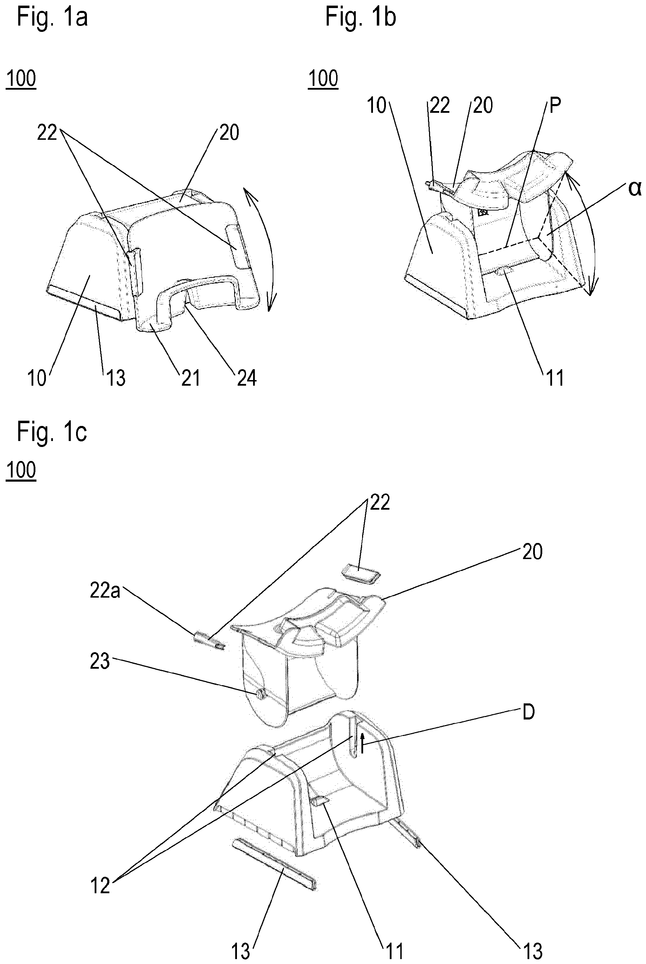

Shown is schematically in
- Fig. 1a:: an exemplary embodiment of an accessory according to the present invention with the swivel component in the first pivot position;
- Fig. 1b:: the accessory of Figure 1a with the swivel component in the second pivot position;
- Fig. 1c:: the accessory of Figures 1a, 1b in an exploded view;
- Fig. 1 d:: a sectional view of the accessory of Figures 1a - 1c with the swivel component in the first pivot position; and
- Fig. 1e:: a sectional view of the accessory of Figures 1a - 1d with the swivel component in the second pivot position.
- Fig. 2a: an exemplary embodiment of an assembly according to the present invention before the container is combined with the accessory;
- Fig. 2b:: the assembly of Figure 2a with the container combined with the accessory before being tilted; and
- Fig. 2c:: the assembly of Figures 2a and 2b with the container combined with the accessory and being tilted therewith.

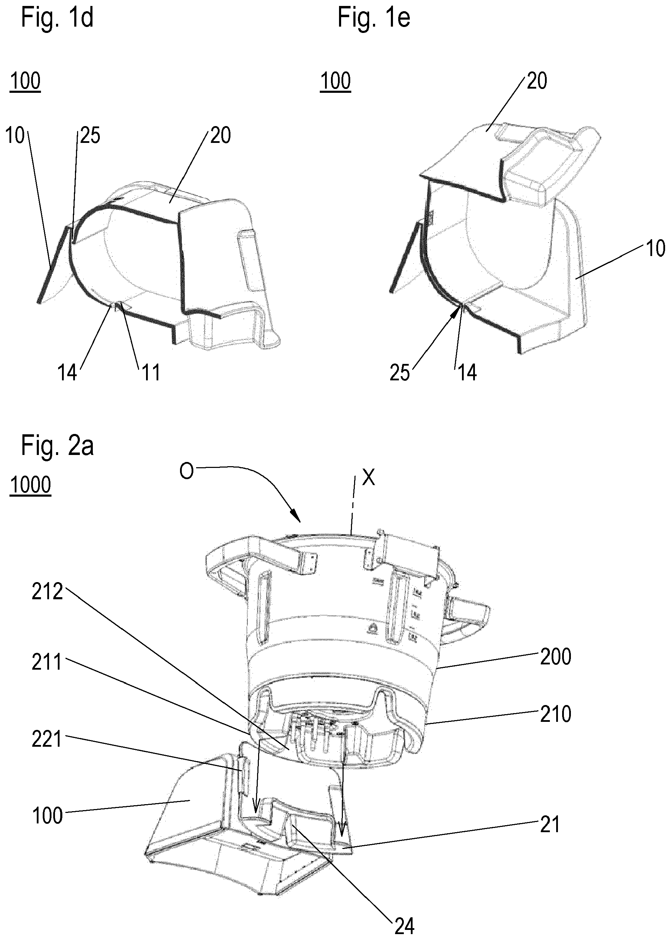

In Figures 1a and 1b, an accessory 100 according to an exemplary embodiment of the present invention is shown in perspective view. Figure 1c provides an exploded view of the accessory 100 with its varius components, and the sectional views shown in Figures 1d, 1e provide an insight into the accessory 100.

The accessory 100 comprises a base component 10 and a swivel component 20. In the figures, the accessory is shown with its base component 10 oriented as designated for utilisation of the accessory 100.

As indicated in Figures 1a, 1b with a double arrow, the base component 10 and the swivel component 20 are pivotable relative to each other: In Figure 1a, the swivel component 20 is shown in a first pivot position relative to the base component 10, while in Figure 1b, the swivel component 20 is depicted after being pivoted, about a pivot axis P and a pivot angle α, to a second pivot position relative to the base component 10.

In particular, and as best seen in Figure 1c, the base component 10 and the swivel component 20 are connected to each other by a hinge which in the present case is formed by protrusions 23 (only one of which is visible in Figure 1c) of the swivel component 20, the protrusions 23 each inserted in a respective reception slot 12 formed in the base component 10 and respectively extending in a slot direction D (which in the exemplary embodiment and its orientation depicted runs vertically). In particular, such hinge facilitates that the base component 10 and the swivel component 20 can be disassembled by linearly moving the swivel component 20 relative to the base component 10 in the slot direction (which in the present case is horizontally lifting the swivel component).

The swivel component 20 of the accessory shown forms a reception recess 21 configured to receive a portion of a container. In the case depicted, the recess is shaped as a groove configured to receive a section of a rim 211 a bottom 210 of the container 200 comprises, as depicted in Figure 2a showing an assembly 1000 according to an exemplary embodiment of the present invention, the assembly 1000 comprising the accessory 100 and the container 200.

The reception recess 21 is interrupted by a projection 24 formed by the swivel component 20 and configured to engage with a clearance 212 in the rim 211. Thereby, the container 200 is advantageously stabilised when taken and supported by the swivel component 20. In particular, the projection 24 inhibits that the container 200 supported by the swivel component 20 can rotate, about its centre axis X, relative to the swivel component 20.

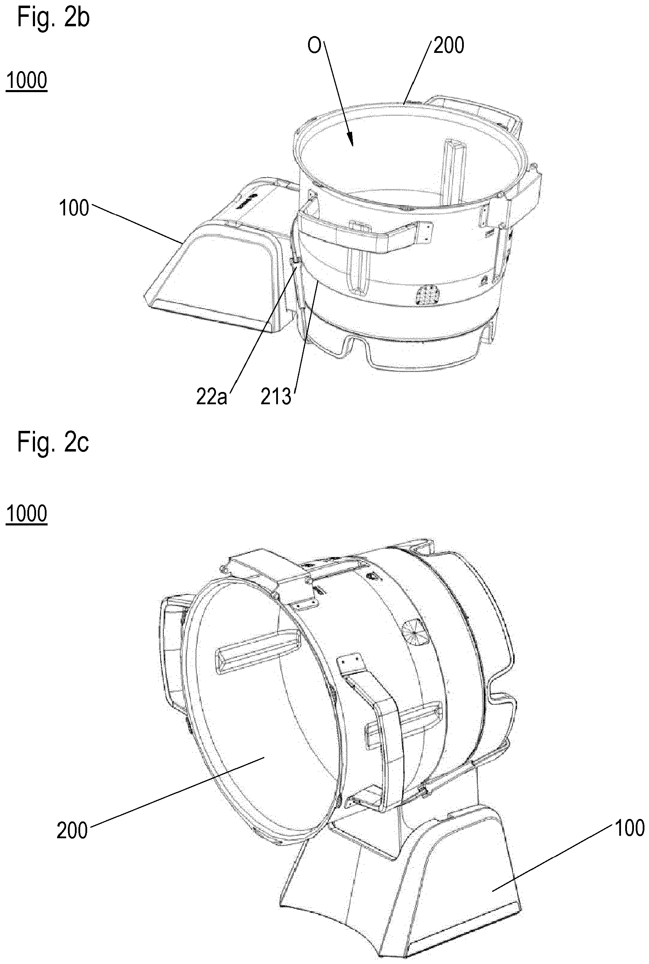

Figure 2b depicts the assembly 1000 with the container 200 being taken by the swivel component 20 of the accessory 100.

Therein, as further seen in Figures 2a and 2b, in the depicted orientation of the base component 10 designated for utilisation of the accessory 100, the swivel component 20 is configured to take, in its first pivot position, the container 200 in an orientation of the container 200 which is designated for preparing food in the container 200, in which orientation in particular a filling opening O of the container directs upwards, the bottom 210 of the container is the container's undermost portion and the centre axis X of the container 200 is oriented vertically.

By receiving said portion of the rim 211 in the recess 21, the swivel component 20 engages with the container 200 and reaches under the bottom 210 thereof, thereby taking the container 200 in the first pivot position.

If the swivel component 20 is then pivoted, by a user, about the pivot angle α and to the second pivot angle, the swivel component supports and tilts the container 200, as shown in Figure 2c. Such tilted, the container can be easily poured out, wherein the user does not have to lift the possibly heavy container. In particular, he instead can easily use at least one hand to scrape out the container. Preferably, the pivot angle α (referenced in Figure 1b) is in the range from 60° to 120°. Thereby, a particularly easy discharging of the container is facilitated.

In the present case, the container 200 has a (slightly) conical shape narrowing towards the bottom 210. As a consequence, when the container 200 is tilted, by the accessory 100, about 90° as shown in Figure 2c, a content of the container (not shown) is caused to flow or slide out of the container.

The container shown in Figures 2a to 2c forms part of a multi-purpose kitchen appliance, the rim 211 framing a space at the bottom 210 of the container 200 through which space electrical and mechanical components (such as a rotatable tool and/or a heater) can be connected with a base station (not shown) of the kitchen appliance.

As further best seen in Figures 1b, 1e, in the embodiment depicted, the pivoting of the swivel component 20 relative to the base component 10 is delimited by a stopper element 11. Thereby, an overtilting of the container when supported and tilted by the swivel component 20 is prevented.

The swivel component 20 of the accessory 100 shown in the figures further comprises two anti-slide elements 22 (referenced in particular in Figures 1a to 1c) configured to stabilise the container, when this is supported and tilted, by the swivel component 20, from the first to the second pivot position. Preferably, the anti-slide elements 22 comprise an elastic material such as an elastomer, in particular silicone, the container may come to rest on in the second pivot position. They serve to inhibit that the container escapes from the swivel component 20 in the second pivot position. Advantageously, they have a geometry fitting to a shape of the container. In particular, the anti-slide elements 22 may form a thickening 22a configured to engage with a depression of the container 200, as seen in Figure 2b, in particular in groove forming a welding area of the container. Thereby, the anti-slide elements 22 provide for an advantageous self-locking of the container 200 supported by the swivel component 20.

As referenced in Figures 1a and 1c, the base component 10 of the accessory 100 shown in the figures further has anti-glide elements 13 stabilising the accessory on a worktop (counter). Such anti-glide elements 13 may advantageously be at least partially made of an elastic material such as an elastomer, in particular silicone.

Figures 1d, 1e each provide a sectional view of the accessory 100. Thereby, a snap mechanism for retaining the swivel component 20 in its second pivot position relative to the base component 10 is made visible: In the present case, the snap mechanism comprises an elastic snap 14 comprised by the base component 10, and a groove 25 formed by the swivel component 20. When the swivel component 20 is pivoted into its second pivot position relative to the base component 10, as shown in Figure 1e, the elastic snap 14 latches in the groove 25, thereby retaining the swivel component 20 in its second pivot position. As a consequence, a user is relieved from having to care about the tilted container remaining in its position.

Disclosed is an accessory 100 for tilting a container 200 for preparing food. The accessory 100 comprises a base component 10 and a swivel component 20. The swivel component 20 is pivotable relative to the base component 10 and configured to take the container 200 in a first pivot position, and to support and tilt the container when being pivoted, about a pivot angle α, to a second pivot position.

Further disclosed is an assembly 1000 comprising such accessory 100 and a container 200 compatible to the accessory, i.e., a container the swivel component 20 of the accessory is suited to take, support and tilt. Moreover, a kitchen appliance is disclosed which comprises a container 200, a base station and said accessory 100 configured to take, support and tilt the container 200.

### Reference signs

- 10: base component
- 11: stopper
- 12: reception slot
- 13: anti-glide element
- 14: elastic snap

- 20: swivel component
- 21: recess
- 22: anti-slide element
- 22a: thickening of 22
- 23: protrusion
- 24: projection
- 25: groove

- 100: accessory

- 200: container
- 210: bottom of the container
- 211: rim
- 212: clearance

- 1000: assembly

- α: pivot angle
- D: slot direction
- O: filling opening
- P: pivot axis
- X: centre axis

## Claims

1. Accessory (10) for tilting a container (200) for preparing food, the accessory comprising a base component (10) and a swivel component (20) which is pivotable relative to the base component (10), the swivel component (20) configured to take the container (200) in a first pivot position, and to then support and tilt the container (200) when being pivoted about a pivot angle (α) to a second pivot position.

2. Accessory according to claim 1, wherein the pivot angle (α) is at least 60°, at least 85°, at least 90° or at leas 120°.

3. Accessory according to one of claims 1 or 2, wherein the swivel component (20) forms a reception recess (21) configured to receive at least a portion of the container (200).

4. Accessory according to claim 3, wherein the reception recess 21 is interrupted by a projection (24) formed by the swivel component 20.

5. Accessory according to one of the preceding claims, wherein in an orientation of the base component (10) designated for utilisation of the accessory, the swivel component (20) is configured to reach under a bottom (210) of the container (200) when taking it in the first pivot position.

6. Accessory according to one of the preceding claims, comprising a stopper element (11) configured to delimit a pivoting of the swivel component (20) relative to the base component (10).

7. Accessory according to one of the preceding claims, wherein the swivel component (20) comprises at least one anti-slide element (22) configured to stabilise the container (200) supported by the swivel component (20) in the second pivot position.

8. Accessory according to one of the preceding claims, further comprising a retainer mechanism configured to retain the swivel component (20) with the container (200) in the second pivot position once it has been pivoted into the second position.

9. Accessory according to claim 8, wherein the retainer mechanism comprises a a snap mechanism (14, 25).

10. Accessory according to one of the preceding claims, wherein the container the swivel component (20) is configured to take, support and tilt forms part of a multi-purpose kitchen appliance.

11. Assembly (1000) comprising a container (200) for preparing food, and an accessory (100) according to one of the preceding claims, the swivel component (20) of the accessory suited to take, support and tilt the container (200).

12. Kitchen appliance comprising
- a container (200),
- a base station defining a designated position for the container (200) and configured to drive a treatment of food contained in the container (200) when this is positioned in its designated position; and
- an accessory (100) according to one of claims 1 to 8, wherein the swivel component (20) of the accessory (100) is suited to take, support and tilt the container (200).
